# EUROPEAN PATENT APPLICATION

(11) **EP 4 345 797 A1**
(43) Date of publication of application: **03.04.2024**
(21) Application number: 23198879.1
(22) Date of filing: 21.09.2023
(51) Int. Cl.: G09B 19/24

(54) **WELD TRAINING SYSTEMS WITH WELDING TECHNIQUE MONITORING**

(30) Priority: 30.09.2022 US 202263412066 P; 30.08.2023 US 202318239953
(71) Applicant: Illinois Tool Works Inc., Glenview, IL 60025 (US)
(72) Inventor: BECKER, William Joshua, Glenview, 60025 (US)
(74) Representative: HGF

(57) **Abstract**

Described herein are examples of weld training systems that perform welding technique monitoring as part of the training regime. In particular, the disclosed weld training systems implement a fast, simple, and intuitive process for calibrating a system to recognize joint characteristics later used to monitor (and/or provide feedback regarding) welding technique. In some examples, the weld training systems may even be able to recognize some joint characteristics, and perform some crude welding technique monitoring, with almost no calibration at all, which can be of enormous help where an operator forgets, or is unwilling to take the time to fully calibrate the system(s).

## Description

### CROSS REFERENCE TO RELATED APPLICATIONS

This application claims the benefit of, and priority to, U.S. Provisional Application No. 63/412,066, filed September 30, 2022, entitled "Weld Training Systems with Welding Technique Monitoring," the entirety of which is hereby incorporated by reference.

### TECHNICAL FIELD

The present disclosure generally relates to weld training systems and, more particularly, to weld training systems with welding technique monitoring.

### BACKGROUND

Welding technique generally refers to the way in which a welding operator positions, moves, and/or manipulates a welding-type tool relative to a workpiece (and/or a welding joint of the workpiece), such as, for example, during a welding-type operation. Good welding technique can positively impact the quality of a weld. Bad welding technique can negatively impact the quality of a weld. However, it can sometimes be difficult for (e.g., less experienced) human operators to accurately judge whether welding technique is good or bad.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to weld training systems with welding technique monitoring, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIG. 1 shows an example of a weld training system, in accordance with aspects of this disclosure.
FIG. 2 is a block diagram of the weld training system of FIG. 1, in accordance with aspects of this disclosure.
FIGS. 3-5 are flow diagrams illustrating an example operation of a technique monitoring process of the weld training system of FIG. 2, in accordance with aspects of this disclosure.
FIG. 6 is a diagram showing an example of how the technique monitoring process of FIG. 3 might automatically determine a horizontal joint position using sensor data of the weld training system of FIGS. 1-2, in accordance with aspects of this disclosure.
FIGS. 7a-7b show example graphical user interfaces (GUIs) that might be shown during the technique monitoring process of FIG. 3, in accordance with aspects of this disclosure.
FIGS. 8a-8b show examples of a vertically oriented joint, and how several vectors that might be used during the technique monitoring process of FIG. 3 relate to the joint, in accordance with aspects of this disclosure.
FIGS. 9a-9b show examples of a horizontally oriented joint, and how several vectors that might be used during the technique monitoring process of FIG. 3 relate to the joint, in accordance with aspects of this disclosure.

The figures are not necessarily to scale. Where appropriate, the same or similar reference numerals are used in the figures to refer to similar or identical elements. For example, reference numerals utilizing lettering (e.g., workpiece 122a, workpiece 122b) refer to instances of the same reference numeral that does not have the lettering (e.g., workpieces 122).

### DETAILED DESCRIPTION

Some examples of the present disclosure relate to weld training systems that monitor welding technique monitoring and provide feedback. The disclosed weld training systems implement a fast, simple, and/or intuitive process for calibrating the system(s) to recognize the joint characteristics used to monitor (and/or provide feedback regarding) welding technique. In some examples, the weld training systems may even be able to recognize some joint characteristics, and perform some crude welding technique monitoring, with almost no calibration at all, which can be helpful when an operator forgets, or is unwilling to take the time to fully calibrate the system(s).

Some examples of the present disclosure relate to a method of monitoring welding technique for a horizontal welding joint, the method comprising: determining, via processing circuitry, a base plate perpendicular vector based on first sensor data detected by a sensor system during a first time period; determining, via processing circuitry, a joint orientation vector based on the base plate perpendicular vector and second sensor data detected during a second time period by the sensor system, the joint orientation vector being perpendicular to the base plate perpendicular vector, and a tool orientation vector of a welding-type tool tracked by the sensor system; tracking, during a third time period, via the processing circuitry, the tool orientation of the welding-type tool using third sensor data detected by the sensor system during the third time period; and identifying, via the processing circuitry, a welding technique parameter value based on the tool orientation of the welding-type tool, the base plate perpendicular vector, and the joint orientation vector.

In some examples, the first sensor data comprises gravity data representative of a gravity vector and tool orientation data. In some examples, the tool orientation data comprises image data representative of one or more images, and determining the base plate perpendicular vector and the joint orientation vector comprises: identifying a tool orientation vector based on a rigid body model of the welding-type tool and an arrangement of markers shown on the welding-type tool in the one or more images, the tool orientation vector being representative of the tool orientation of the welding-type tool; determining the base plate perpendicular vector based on the gravity vector and the tool orientation vector; and determining the joint orientation vector based on the base plate perpendicular vector and the tool orientation vector. In some examples, the third time period comprises a time period when the welding-type tool is performing a welding-type operation, and the welding technique parameter value is identified in real time during the third time period.

In some examples, the first time period and the second time period comprise non-overlapping time periods. In some examples, the method further comprises providing feedback, via a user interface, based on the welding technique parameter value, the welding technique parameter value comprising a work angle value or a travel angle value of the welding-type tool. In some examples, the sensor system comprises a camera, an optical sensor, a motion sensor, a depth sensor, an RF sensor, an ultrasonic sensor, a magnetic sensor, an acoustic sensor, or an accelerometer.

Some examples of the present disclosure comprise a method of monitoring welding technique for a vertical welding joint, the method comprising: determining, via processing circuitry, a joint orientation vector based on first sensor data detected by a sensor system during a first time period; determining, via processing circuitry, a base plate perpendicular vector based on the joint orientation vector and second sensor data detected during a second time period by the sensor system; tracking, during a third time period, via the processing circuitry, a tool orientation of the welding-type tool using third sensor data detected by the sensor system during the third time period; and identifying, via the processing circuitry, a welding technique parameter value based on the tool orientation of the welding-type tool, the base plate perpendicular vector, and the joint orientation vector.

In some examples, the first sensor data comprises gravity data representative of a gravity vector. In some examples, the second sensor data comprises gravity data representative of a gravity vector and tool orientation data, wherein determining the base plate perpendicular vector and the joint orientation vector comprises: determining the joint orientation vector based on the gravity vector; identifying, via the processing circuitry, a tool orientation vector based on the tool orientation data, the tool orientation vector being representative of the tool orientation of the welding-type tool; determining, via the processing circuitry, a base plate surface vector as being perpendicular to the joint orientation vector and the tool orientation vector; and determining, via the processing circuitry, the base plate perpendicular vector as being perpendicular to the base plate surface vector and the joint orientation vector. In some examples, the third time period comprises a time period when the welding-type tool is performing a welding-type operation, and the welding technique parameter value is identified in real time during the third time period.

In some examples, the first time period and the second time period comprise overlapping time periods. In some examples, the method further comprises providing feedback, via a user interface, based on the welding technique parameter value, the welding technique parameter value comprising a work angle value or a travel angle value of the welding-type tool. In some examples, the sensor system comprises a camera, an optical sensor, a motion sensor, a depth sensor, an RF sensor, an ultrasonic sensor, a magnetic sensor, an acoustic sensor, or an accelerometer.

Some examples of the present disclosure relate to a weld monitoring system for a horizontal welding joint, comprising: a sensor system configured to detect first sensor data during a first time period, second sensor data during a second time period, and third sensor data during a third time period; processing circuitry; and memory circuitry comprising non-transitory machine readable instructions which, when executed by the processing circuitry, causes the processing circuitry to: determine, a base plate perpendicular vector based on the first sensor data detected by the sensor system during the first time period, determine a joint orientation vector based on the base plate perpendicular vector and second sensor data detected during a second time period by the sensor system, the joint orientation vector being perpendicular to the base plate perpendicular vector and a tool orientation of a welding-type tool tracked by the sensor system, track, during a third time period, the tool orientation of the welding-type tool using third sensor data detected by the sensor system during the third time period, and identify a welding technique parameter value based on the tool orientation of the welding-type tool, the base plate perpendicular vector, and the joint orientation vector.

In some examples, the first sensor data comprises gravity data representative of a gravity vector and tool orientation data. In some examples, the tool orientation data comprises image data representative of one or more images, and determining the base plate perpendicular vector and the joint orientation vector comprises: identifying a tool orientation vector based on a rigid body model of the welding-type tool and an arrangement of markers shown on the welding-type tool in the one or more images, the tool orientation vector being representative of the tool orientation of the welding-type tool, determining the base plate perpendicular vector based on the gravity vector and the tool orientation vector, and determining the joint orientation vector based on the base plate perpendicular vector and the tool orientation vector.

In some examples, first time period and the second time period comprise non-overlapping time periods, the third time period comprises a time period when the welding-type tool is performing a welding-type operation, and the welding technique parameter value is identified in real time during the third time period. In some examples, the system further comprises a user interface configured to provide feedback based on the welding technique parameter value, the welding technique parameter value comprising a work angle value or a travel angle value of the welding-type tool. In some examples, the sensor system comprises a camera, an optical sensor, a motion sensor, a depth sensor, an RF sensor, an ultrasonic sensor, a magnetic sensor, an acoustic sensor, or an accelerometer.

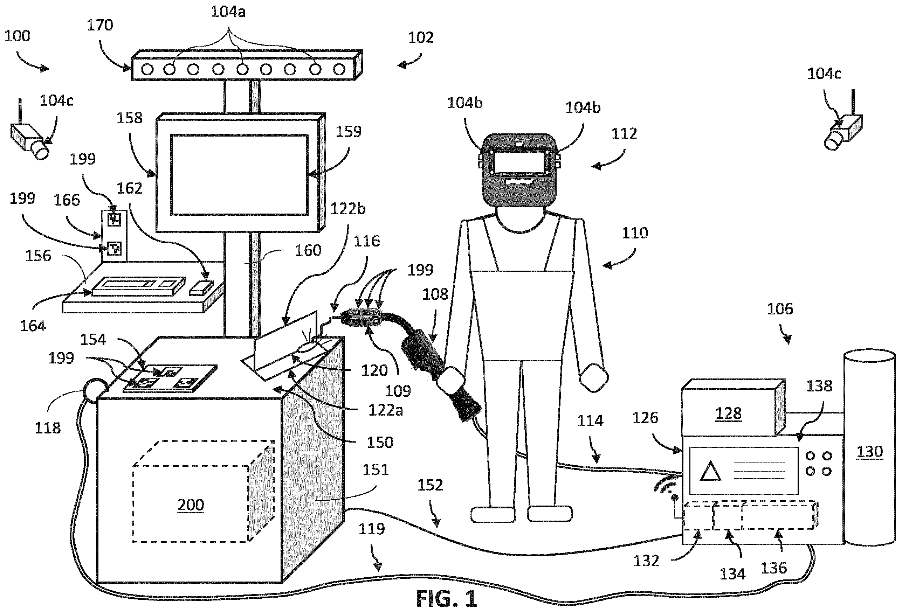

FIG. 1 shows an example weld training system 100. In some examples, some or all of the weld training system 100 may comprise a virtual, augmented, and/or mixed reality weld training system 100. As shown, the weld training system 100 includes a welding stand 102, several sensors 104 (part of and/or separate from the welding stand 102), welding-type equipment 106, and a welding-type tool 108.

While shown as a welding torch or gun configured for gas metal arc welding (GMAW) in the example of FIG. 1, in some examples, the welding-type tool 108 may instead be a different kind of welding-type tool 108. For example, the welding-type tool 108 may be an electrode holder (i.e., stinger) configured for shielded metal arc welding (SMAW), a torch and/or filler rod configured for gas tungsten arc welding (GTAW), a welding gun configured for flux-cored arc welding (FCAW), and/or a plasma cutter. While shown as a live welding-type tool 108 in the example of FIG. 1, in some examples, the welding-type tool 108 may be a mock welding-type tool, and/or be configured for mock (as opposed to live) welding-type operations, such as for (e.g., virtual/augmented reality) weld training.

In the example of FIG. 1, the welding-type tool 108 is shown being held by an operator 110 wearing a welding helmet 112 near the training stand 102. In some examples, the welding helmet 112 may include a display screen and/or one or more other user interface (UI) devices (e.g., knobs, buttons, levers, switches, touch screens, microphones, speakers, haptic devices, lights, eye trackers, etc.). In some examples, the welding helmet 112 may also include one or more of the sensors 104.

In the example of FIG. 1, the welding-type tool 108 is shown using an electrode 116 to apply a welding arc to a joint 120 between two workpieces 122 (e.g., to weld the workpieces together at the joint 120). As shown, the welding-type tool 108 is connected to a welding cable 114 that leads to, and puts the welding-type tool 108 in electrical communication with, the welding-type equipment 106. In some examples, welding-type power (and/or consumables) for the welding arc may be provided to the welding-type tool 108, by the welding equipment 106, via the welding cable 114. In some examples, the welding-type tool 108 may transmit one or more signals to the welding-type equipment 106 when activated (e.g., via the welding cable 114), and the welding-type equipment 106 may provide the welding-type power (and/or consumables) for the arc in response.

In the example of FIG. 1, the welding-type equipment 106 comprises a welding-type power supply 126, wire feeder 128, and gas supply 130. In some examples, the wire feeder 128 may be configured to feed a wire electrode 116 to the welding-type tool 108 (e.g., via welding cable 114). In some examples, the gas supply 130 may be configured to route shielding gas to the welding-type tool 108 (e.g., via welding cable 114). In some examples, the power supply 126 may be configured to route welding-type power to the welding-type tool 108 (e.g., via welding cable 114).

In the example of FIG. 1, the power supply 126 includes power communication circuitry 132, power control circuitry 134, and power conversion circuitry 136 interconnected with one another. In some examples, the power supply 126 may communicate with one or more external devices via one or more signals sent or received by the power communication circuitry 132. In some examples, the power conversion circuitry 136 may be configured to receive input power (e.g., from a generator, a battery, mains power, etc.) and convert the input power to welding-type output power, such as might be suitable for use by the welding-type tool 108 for welding-type operations. In some examples, the power control circuitry 134 may be configured to control operation of the power communication circuitry 132 power conversion circuitry 136, wire feeder 128, and/or gas supply 130 (e.g. via one or more control signals) in accordance with one or more welding parameters.

In the example of FIG. 1, the welding-type equipment 106 further includes an operator interface 138. In some examples, the operator interface 138 may comprise one or more display screens, touch screens, knobs, buttons, levers, switches, microphones, speakers, lights, and/or other mechanisms through which an operator 110 may provide input to, and/or receive output from, the welding-type equipment. For example, an operator 110 may use the operator interface 138 to input one or more welding parameters (e.g., target voltage, current, wire feed speed, wire/filler type, wire/filler diameter, gas type, gas flow rate, welding-type process, material type of workpiece 122, position of welding-type process, etc.). As another example, the operator 110 may use the operator interface 138 to view and/or otherwise understand the current welding parameters of the welding-type equipment 106.

While shown as part of the power supply 126 in FIG. 1, in some examples, the operator interface 138, power control circuitry 134, and/or power communication circuitry 132 (and/or some other control/communication circuitry) may be part of the wire feeder 128 and/or gas supply 130. In some examples, the welding-type equipment 106 may be omitted entirely, or may be mock and/or simulated welding-type equipment 106, such as may be used for training, simulated, and/or mock welding-type operations.

In the example of FIG. 1, the welding-type equipment 106 is connected to a support platform 150 of the welding stand 102 via a clamp 118 that is connected to the welding-type equipment 106 via a clamp cable 119. In some examples, the clamp 118 may be attached to a workpiece 122, some other portion of the welding stand 102, or some other piece of equipment, instead of the support platform 150. During live welding, the support platform 150, workpiece(s) 122, clamp 118, welding-type tool 108, clamp cable 119 and/or welding cable 114 may form a closed circuit through which welding-type output power may be routed. As shown, the welding-type equipment 106 also has a separate (e.g., data) connection to the welding stand 102 via data cable 152, though, in some examples, the welding stand 102 may be in wireless communication with the welding-type equipment 106 (and/or welding helmet 112 welding-type tool 108, etc.).

In the example of FIG. 1, the support platform 150 of the welding stand 102 provides support for one or more workpieces 122 and a platform placard 154. As shown, the platform placard 154 is positioned on, and/or attached to, the support platform 150. While shown as positioned on the support platform 150 in the example of FIG. 1, in some examples, the platform placard 154 may instead be positioned on a shelf 156 of the welding stand 102, elsewhere on the welding stand 102, and/or elsewhere in the weld training system 100.

In the example of FIG. 1, the platform placard 154 includes three markers 199 aligned in a horizontal plane that is parallel to the horizontal surface of the support platform 150. In some examples, sensors 104 of the weld training system 100 may be configured to detect the markers 199 on the platform placard 154 and/or otherwise recognize the platform placard 154. In some examples, the weld training system 100 may be configured to identify a plane in which the platform placard 154 lies, and/or in which the markers 199 are aligned, and determine a direction of gravity based on (e.g., perpendicular to) the plane. In some examples, the weld training system 100 may determine the direction of gravity based on the plane and/or one or more offsets/constants (e.g., input and/or stored in memory).

In the example of FIG. 1, the welding stand 102 further includes a shelf 156 attached to an arm 160 that extends from the support platform 150. As shown, a shelf placard 166 is positioned on, and/or attached to, the shelf 156. While shown as positioned on the shelf 156 in the example of FIG. 1, in some examples, the shelf placard 166 may instead be positioned on the support platform 150, the arm 160, elsewhere on the welding stand 102, and/or elsewhere in the weld training system 100.

In the example of FIG. 1, the shelf placard 166 includes two markers 199 that are vertically aligned. In some examples, sensors 104 of the weld training system 100 may be configured to detect the markers 199 on the shelf placard 166 and/or otherwise recognize the shelf placard 166. In some examples, the weld training system 100 may be configured to determine a direction of gravity based on (e.g., parallel to) the detected alignment of the markers 199 on the shelf placard 166 and/or recognized orientation of the shelf placard 166. In some examples, the weld training system 100 may determine the direction of gravity based on the orientation of the markers 199, orientation of the shelf placard 166, and/or one or more offsets/constants (e.g., input and/or stored in memory).

Though sometimes discussed herein as a direction of gravity, in some examples, the direction determined from the platform placard 154 and/or shelf placard 166 may not actually be precisely parallel to the direction of gravity. For example, the support platform 150 may be on a floor that is inclined, or the cabinet 151, shelf 156, arm 160 and/or markers 199 slightly misaligned, in which case the plane of the platform placard 154, and/or orientation of the shelf placard 166, may not be perfectly perpendicular/parallel to gravity. In such examples, a direction perpendicular/parallel to the platform placard 154/shelf placard 166 might be more of a gravitational approximation, or pseudo gravitational direction, than a precise direction of gravity. Nevertheless, for the purposes of this disclosure, such a gravitational approximation, or pseudo gravitational direction is sufficient. Therefore, it should be understood that, where a direction of gravity is discussed below, the direction may actually be a gravitational approximation or pseudo gravitational direction rather than a direction precisely parallel to the actual direction of gravity.

In the example of FIG. 1, the shelf 156 also supports mouse 160 and keyboard 162. In some examples, the mouse 160 and keyboard 162 may be considered input devices of the welding stand 102. In some examples, additional input devices may be provided, such as, for example, one or more microphones. In some examples, the welding-type tool 108 may include one or more input devices that allow the welding-type tool 108 to also be used as an input device.

In the example of FIG. 1, the welding stand 102 further includes a display monitor 158 connected to the arm 160 of the welding stand 102. In the example of FIG. 1, the display monitor 158 has a display screen 159. In some examples, the display screen 159 may comprise an output device configured for displaying parameters, feedback, and/or other information pertaining to the weld training system 100. In some examples, the display monitor 158 may include additional output devices, such as audio speakers, for example. In some examples, the display screen 159 may be a touch screen, and thus may also be considered an input device.

In the example of FIG. 1, the welding stand 102 further includes a sensor assembly 170 attached to the arm 160. As shown, the sensor assembly 170 includes a plurality of sensors 104a oriented towards the platform 150, operator 110, and/or welding-type tool 108. In some examples, the sensor assembly 170 may be adjustable, such as via one or more knobs and/or other adjustment mechanisms. In some examples, the sensor assembly 170 (and/or sensors 104a) may be configured to record sensor data relating to objects in the welding environment (and/or in a field of view of the sensors 104) during a (e.g., live or simulated) welding operation.

In the example of FIG. 1, the weld training system 100 also includes several other sensors 104 (e.g., unattached to the welding stand 102) that are configured to record sensor data relating to objects in the welding environment (and/or in a field of view of the sensors 104). As shown, in addition to sensors 104a, the weld training system 100 includes sensors 104b attached to the welding helmet 112, and sensors 104c positioned around the welding environment. While not shown, in some examples, additional sensors 104 may be included on or in the welding-type tool 108. This arrangement of sensors 104 may enable some sensors 104 to monitor the welding environment (e.g., track movement of an object) when other sensors 104 are obscured.

In some examples, the sensors 104 may comprise, for example, motion sensors, depth sensors, camera sensors (e.g., infrared cameras, visible spectrum cameras, high dynamic range cameras, etc.), acoustic sensors, optical sensors, radio frequency (RF) sensors, ultrasonic sensors, magnetic sensors, acceleration sensors (e.g., accelerometers), gyroscopic sensors, and/other appropriate sensors. In some examples, the sensor data captured by the sensors 104 may comprise one or more images, videos, sounds, temperatures, radio waves, heat waves, radiation measurements, and/or other appropriate data. In some examples, the acceleration sensor(s) 104 may detect the direction(s) and/or magnitude(s) of linear acceleration(s) (e.g., due to gravity, etc.). In some examples, the sensor data may allow the welding stand 102 to track, detect, and/or record positions, orientations, and/or movement of objects (e.g., operator 110, welding-type tool 108, workpiece(s) 122, placards 154/166, etc.) in the welding environment during a welding operation.

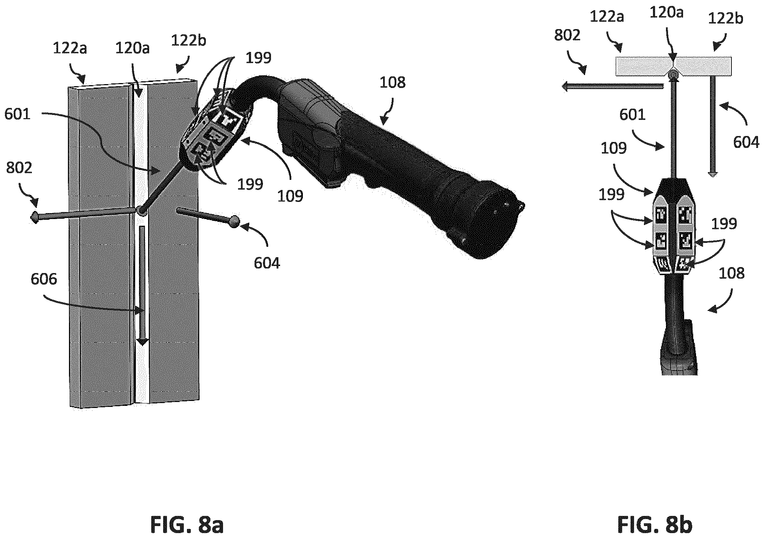

In the example of FIG. 1, the welding-type tool 108 includes markers 199 on a nozzle 109 of the welding-type tool 108 (see also, e.g., FIGS. 8a-8b). In some examples, the welding-type tool 108 may include markers 199 positioned elsewhere on the tool 108 (e.g., on the handle, neck, etc.). In some examples, the fixed arrangement of markers 199 on the surface of the welding-type tool 108 may define a rigid body that allows the weld training system 100 to track the welding-type tool 108 (e.g., via sensors 104), and/or determine the position and/or orientation of the welding-type tool 108.

As discussed above, the placards 154/166 also includes markers 199. In some examples, the workpiece(s) 122 may also include one or more markers 199. In some examples, the markers 113 may be passive markers, such as, for example, reflective markers. In some examples, the markers 113 may be active markers, such as, for example, light-emitting markers (e.g., light-emitting diodes (LEDs)). In some examples, the markers 113 may assist the weld training system 100 (e.g., via sensors 104) in tracking and/or determining a position and/or orientation of the object on which the markers are placed.

In some examples, the sensors 104 may be communicatively coupled to a training controller 200 of the welding stand 102. For example, the sensors 104 may comprise communication circuitry to facilitate wired and/or wireless communication with the training controller 200. In some examples, the sensors 104 are configured to provide sensor data (e.g., image data, acoustic data, RF data, ultrasonic data, etc.) to the training controller 200, such as via one or more signals, for example. In some examples, the sensors 104 are further configured to receive data (e.g., configuration data, setup data, commands, register settings, etc.) from the training controller 200. In the example of FIG. 1, the training controller 200 is disposed within a cabinet 151 of the welding stand 102.

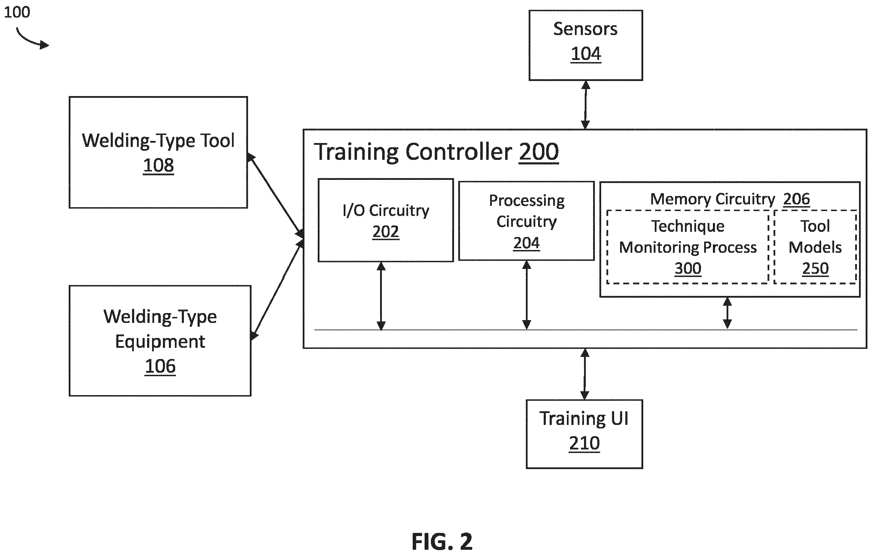

FIG. 2 is a block diagram showing components and connections of the training controller 200. In the example of FIG. 2, the training controller 200 is communicatively coupled with the sensors 104, the welding-type equipment 106, the welding-type tool 108, and a training UI 210.

In some examples, the training UI 210 may include one or more input devices and/or output devices. In some examples, the input devices may include the mouse 162, the keyboard 164, the (e.g., touch screen) display screen 159, the operator interface 138 of the welding-type equipment 106, and/or one or more other user input devices (e.g., of the welding helmet 112 and/or welding-type tool 108). In some examples, the output devices may include the display monitor 158, operator interface 138 of the welding-type equipment 106, and/or one or more other user output devices (e.g., of the welding helmet 112 and/or welding-type tool 108).

In some examples, the training UI 210 may be configured to receive inputs from the operator 110, provide input signals (e.g., representative of the inputs) to the training controller 200, receive output signals (e.g., representative of outputs) from the training controller 200, and provide the outputs to the operator 110. In some examples, the training controller 200 may comprise analog and/or discrete circuitry, and/or one or more digital computing systems. In the example of FIG. 2, the training controller 200 includes memory circuitry 206, processing circuitry 204, and input/output (I/O) circuitry 202 electrically (and/or communicatively) connected to one another via a common electrical bus.

In some examples, the I/O circuitry 202 may comprise communication circuitry for communicating with other systems and/or devices (e.g., the sensors 104, welding-type tool 108, welding-type equipment 106, and/or training UI 210). In some examples, the communication circuitry may include one or more wireless adapters, wireless cards, cable adapters, wire adapters, dongles, radio frequency (RF) devices, wireless communication devices, Bluetooth devices, IEEE 802.11-compliant devices, WiFi devices, cellular devices, GPS devices, Ethernet ports, network ports, lightning cable ports, cable ports, etc. In some examples, the communication circuitry may be configured to facilitate communication via one or more wired media and/or protocols (e.g., Ethernet cable(s), universal serial bus cable(s), etc.) and/or wireless mediums and/or protocols (e.g., near field communication (NFC), ultra high frequency radio waves, IEEE 802.11x, Zigbee, HART, LTE, Z-Wave, WirelessHD, WiGig, etc.).

In some examples, the I/O circuitry 202 may be configured to generate one or more signals representative of input received (e.g., from the sensors 104, welding-type tool 108, welding-type equipment 106, and/or training UI 210) and provide the signal(s) to the bus. In some examples, the I/O circuitry 202 may also be configured to control the training UI 210 to generate one or more outputs in response to one or more signals (e.g., received via the bus).

In some examples, the processing circuitry 204 comprises one or more processors, controllers, and/or graphical processing units (GPUs). In some examples, the processing circuitry 204 may comprise counter circuitry and/or clock circuitry. In some examples, the processing circuitry 204 may be configured to execute used to execute machine readable (and/or processor executable) instructions stored in memory 206.

In the discussion below, certain items and/or information is sometimes described as being included, stored, and/or recorded in memory (and/or memory circuitry) as a shorthand for specifying that data representative of those items and/or information is included, stored, and/or recorded in memory. In the example of FIG. 2, the memory circuitry 206 includes (and/or stores) models 250 of different welding-type tools 108. In some examples, the tool models 250 may be rigid body models. While not shown in the example of FIG. 2, in some examples, the memory circuitry 206 may also include (and/or store) machine readable instructions comprising counter and/or clock programs. In some examples, the memory circuitry 206 may also include (and/or store) one or more of the thresholds discussed herein.

In some examples, the memory circuitry 206 may also include (and/or store) values for one or more determined, target, present, and/or past parameter values, such as, for example, values of welding parameters (e.g., voltage, current, wire feed speed, gas flow rate, etc.), welding technique parameters (e.g., work angle, travel angle, travel speed, travel direction, etc.), weave parameters (e.g., frequency, weave width, dwell time, etc.), tool parameters (e.g., type/identifier of welding-type tool 108, tool orientation vector, etc.), joint parameters (e.g., joint orientation vector, base plate perpendicular vector, base plate surface vector, etc.), and/or operation parameters (e.g., job type/identifier(s), operator identifier(s), weld cell identifier(s), project identifier(s), welding procedure specification (WPS) information, work order information, equipment type/identifier(s), weld number information, etc.). In some examples, one or more parameters may be associated with timestamp information, one or more other parameters, and/or other information.

In the example of FIG. 2, the memory circuitry 206 further includes a welding technique monitoring process 300. In some examples, the technique monitoring process 300 may use and/or update one or more of the stored parameters during operation. In some examples, the technique monitoring process 300 may comprise machine readable instructions stored in memory and/or configured for execution by the monitoring processing circuitry 308 and/or module processing circuitry 224. In some examples, the technique monitoring process 300 may be implemented via discrete circuitry (e.g., of the processing circuitry 204) rather than, or in addition to, instructions stored in the memory circuitry 206.

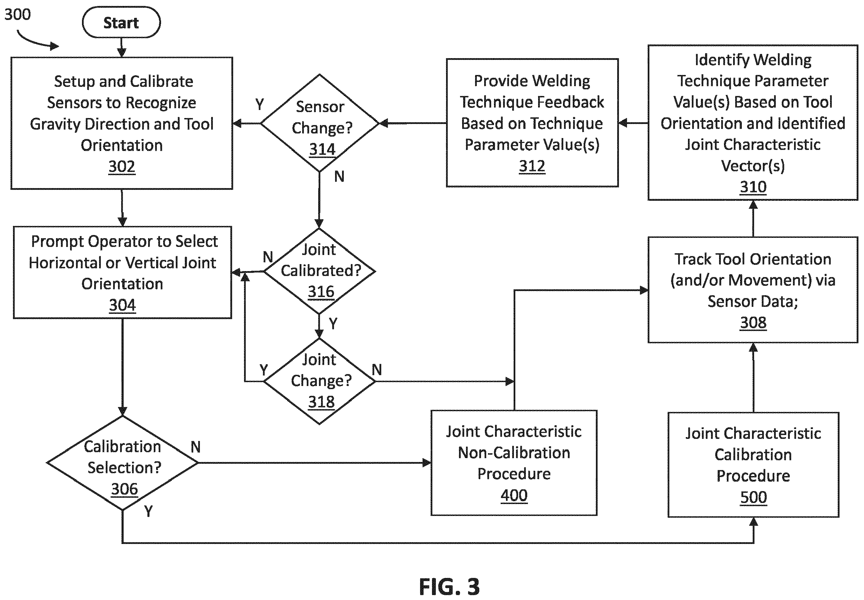

FIG. 3 is a flowchart illustrating an example technique monitoring process 300. In some examples, during the technique monitoring process 300, the processing circuitry 204 uses sensor data from the sensor(s) 104 to track an orientation of the welding-type tool 108 and/or provide real-time welding technique feedback. As used herein, real-time means occurring immediately while allowing for processing time, to create the impression of immediacy to a user. In some examples, during the technique monitoring process 300, the processing circuitry 204 uses joint characteristic information to derive welding technique parameters. In some examples, during the technique monitoring process 300, simple calibration processes, and/or certain assumptions (e.g., based on common welding practices), may be used to obtain the joint characteristic information necessary for welding technique monitoring and/or feedback.

In the example of FIG. 3, the technique monitoring process 300 begins at block 302, where the processing circuitry performs certain setup procedures. In some examples, the setup procedures may include identifying certain (e.g., welding, operation, tool, etc.) parameters that will be used during the technique monitoring process 300. In some examples, this identification may involve input from the operator 110 (e.g., via the training UI 210). In some examples, this identification may involve communication with the welding-type equipment 106. In some examples, certain parameters may be automatically identified based on other, previously identified, parameters.

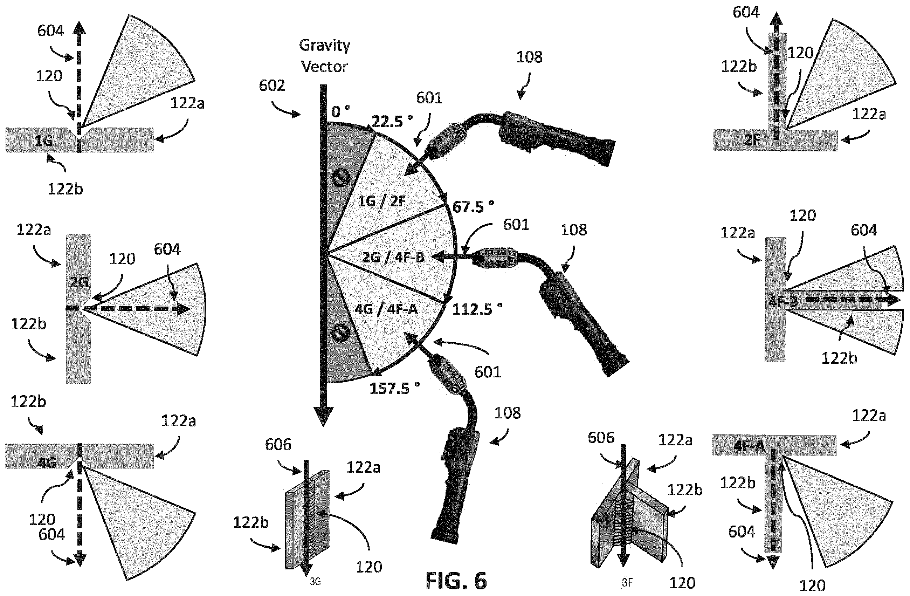

In some examples, the setup procedures of block 302 may include setting up, initiating, and/or calibrating the sensors 104. In some examples, the setup procedures of block 302 may include setting up the weld training system 100 to recognize the position and/or orientation of the welding-type tool 108 based on data detected by one or more sensors 104. In some examples, the weld training system 100 may further use a tool model 250 to facilitate recognition of the position and/or orientation of the welding-type tool 108. In some examples, the processing circuitry 204 may determine an appropriate tool model 250 to use based on one or more tool parameters entered via the training UI 210 and/or determined based on other parameters. In some examples, the weld training system 100 may use the tool model 250 along with (e.g., image) data detected by the sensor(s) 104 to determine an orientation of the welding-type tool 108, and record/represent the tool orientation in the form of a tool orientation vector 601 (see, e.g., FIGS. 6 and 8a-9b).

In some examples, the tool orientation vector 601 may correspond to a direction parallel to the direction (e.g., an electrode 116 of) the welding-type tool 108 is pointing (e.g., towards a workpiece 122 and/or joint 120). In some examples, the tool orientation vector 601 may correspond to a direction parallel to a longitudinal (and/or traveling) direction of the electrode 116, such as, for example when the electrode is within and/or extending from the nozzle 109.

In some examples, the setup procedures of block 302 may include setting up and/or calibrating the weld training system 100 to recognize a direction of gravity. In some examples, the technique monitoring process 300 may use the direction of gravity to facilitate determination of certain characteristics about the joint 120. In some examples, this setup/calibration may be as simple as initializing one or more acceleration sensors 104. In such examples, the acceleration sensor(s) 104 may detect an acceleration due to the Earth's gravitational pull, and monitor/record the direction of the acceleration due to gravity in the form of a gravity vector 602 (see, e.g., FIG. 6).

In some examples, the weld training system 100 may use the platform placard 154 and/or shelf placard 166 to identify a direction of gravity (i.e., gravity vector 602), as discussed above. For example, the processing circuitry 204 may determine an orientation of the platform placard 154 and/or shelf placard 166 based on sensor data detected by the sensor(s) 104 and/or models of the platform placard 154 and/or shelf placard 166 (e.g., stored in memory circuitry 206). In some examples, the markers 199 on the platform placard 154 and/or shelf placard 166 may facilitate the detection of the platform placard 154 and/or shelf placard 166, and/or the orientation determination.

In the example of FIG. 3, after block 302, the technique monitoring process 300 proceeds to block 304 where the processing circuitry 204 prompts the operator 110 to select an orientation of the joint 120 (e.g., horizontal or vertical). In some examples, joint orientation information (in addition to tool orientation information) is needed to determine certain welding technique parameters. For example, both an orientation of the welding-type tool 108 and an orientation of the joint 120 is required to determine travel angle. As another example, both the orientation of the welding-type tool 108 and an orientation of a base plate workpiece 122 (or a vector perpendicular to the base plate workpiece 122) is needed to determine work angle. Thus, the technique monitoring process 300 seeks joint orientation information from the operator 110 at block 304. In some examples, the operator 110 may be prompted to select an orientation of the joint 120, and/or respond to the prompt(s), using the training UI 210.

In some examples, the processing circuitry 204 may assume the orientation of the joint 120 corresponds to a default joint orientation, unless/until an operator 110 selects a different orientation. For example, the memory circuitry 206 may store a default joint orientation that the processing circuitry 204 accesses at block 304 (or 302) and uses as the "selected" orientation of the joint 120, unless/until an operator 110 selects a different orientation (e.g., in response to the prompt(s) discussed above). In some examples, the default joint orientation may be a horizontal orientation, since horizontal orientations are more common than vertical.

In some examples, the processing circuitry 204 assumes that the joint and/or base plate is oriented parallel or perpendicular to the direction of acceleration due to gravity (which is often the case in practice). In some examples, the processing circuitry 204 further assumes that the joint is a linear (as opposed to curved) joint 120. Such assumptions allow for accurate determination of joint orientation and base plate orientation (and/or orientation of a vector perpendicular to the base plate) with minimal calibrations (which is important since operators 110 sometimes either forget, or are reluctant, to spend time doing calibrations). Thus, in some examples, the processing circuitry 204 may only offer the option to select a vertical or horizontal joint.

In the example of FIG. 3, after block 304, the technique monitoring process 300 proceeds to block 306, where the processing circuitry 204 determines whether a calibration selection has been received. In some examples, the processing circuitry 204 may prompt the operator 110 for such a calibration selection (e.g., via the training UI 210). In some examples, a calibration selection at block 306 may indicate that the welding-type tool 108 is oriented properly for calibration of the welding joint 120.

In some examples, a proper orientation of the welding-type tool 108 may be where the nozzle 109 (and/or an electrode 116 extending from the nozzle 109) is pointed towards the joint 120 at a ninety degree angle with respect to the joint 120 or the base plate workpiece 122a, depending on whether the joint 120 is in a horizontal joint position or vertical joint position, respectively. In some examples, the prompt may indicate the proper orientation. FIGS. 8a-9b show examples of a proper orientation in which the welding-type tool 108 may be placed for horizontal and vertical joints 120. In some examples, the processing circuitry 204 may record in memory circuitry 206 the instantaneous value of the tool orientation vector 601 in response to the calibration selection.

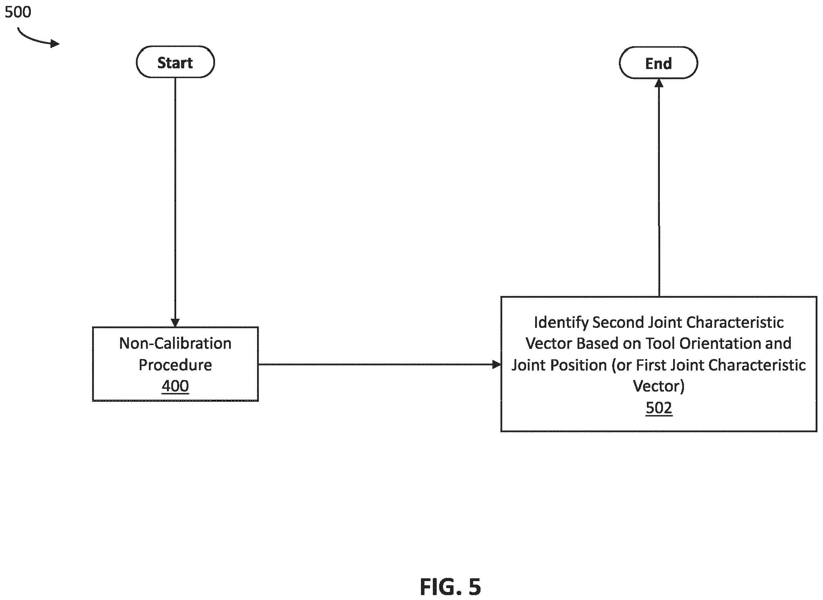

In the example of FIG. 3, the technique monitoring process proceeds to block 500 after block 306 if the processing circuitry 204 determines there has been a calibration selection. At block 500, the processing circuitry 204 performs a joint characteristic calibration procedure. Block 500 is hereinafter referred to as joint characteristic calibration procedure 500. In some examples, during the joint characteristic calibration procedure 500, the processing circuitry 204 identifies and/or records certain joint characteristic information based on the direction of gravity (e.g., gravity vector 602), the orientation of the welding-type tool (e.g., the tool orientation vector 601) at the time of the calibration selection, and whether the joint 120 has been identified as being in a horizontal or vertical joint position. The joint characteristic calibration procedure 500 is discussed further below with respect to FIG. 5.

In the example of FIG. 3, the technique monitoring process 300 proceeds to block 400 after block 306 if the processing circuitry 204 determines there has not been a calibration selection. At block 400, the processing circuitry 204 performs a joint characteristic non-calibration procedure. Block 400 is hereinafter referred to as joint characteristic non-calibration procedure 400.

In some examples, during the joint characteristic non-calibration procedure 400, the processing circuitry 204 also identifies certain joint characteristic information based on the direction of gravity (e.g., gravity vector 602), the orientation of the welding-type tool (e.g., the tool orientation vector 601), and whether the joint 120 has been identified as being in a horizontal or vertical joint position. However, whereas the joint characteristic information identified during the joint characteristic calibration procedure 500 is semi-permanent and can be used continuously unless/until there is some change in the joint 120 (or the sensors 104), the joint characteristic information identified during the joint characteristic non-calibration procedure 400 is fluid and must be dynamically identified continuously. Additionally, the joint characteristic information identified during the joint characteristic non-calibration procedure 400 is less complete than that identified during the joint characteristic calibration procedure 500, leading to less precise and/or complete welding technique parameter determination.

Nevertheless, the joint characteristic non-calibration procedure 400 has the advantage of being able to execute in the absence of any calibration selection from the operator 110. Thus, the joint characteristic non-calibration procedure 400 allows the weld training system 100 to identify at least some joint characteristic information (and/or some welding technique parameter values) even if the operator 110 forgets, is too distracted, or is in too much of a hurry to provide a calibration selection at block 306.

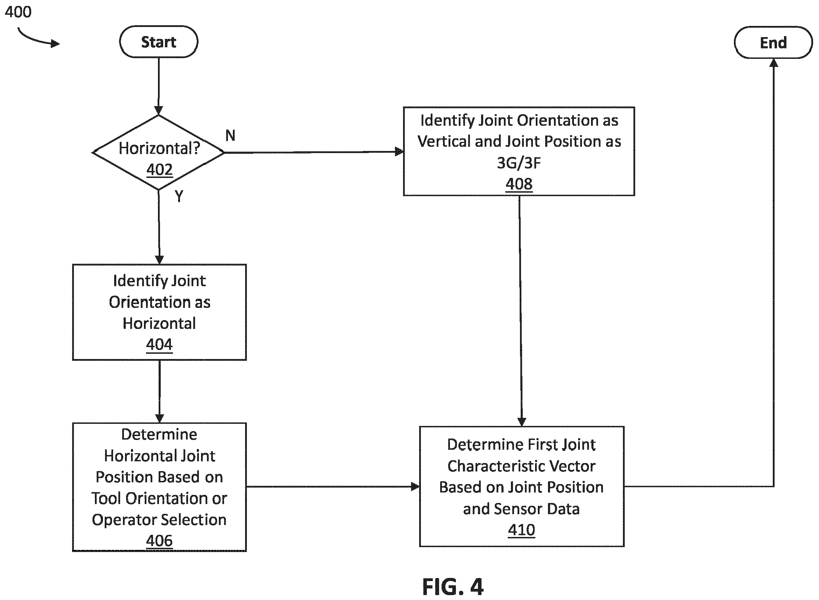

FIG. 4 shows an example of the j oint characteristic non-calibration procedure 400 of the technique monitoring process 300. As shown, the joint characteristic non-calibration procedure 400 begins at block 402 where the processing circuitry 204 decides to either proceed to block 404 or block 408, depending on whether the joint orientation selected at block 304 is vertical or horizontal. Where the selected joint orientation is vertical, the joint characteristic non-calibration procedure 400 proceeds to block 408. At block 408, the processing circuitry 204 determines that the joint is in a 3G or 3F joint position (those being the only two joint positions possible for vertical joints). Where the selected joint orientation is horizontal the joint characteristic non-calibration procedure 400 instead proceeds from block 403 to block 404, where the processing circuitry 204 seeks additional information to determine the joint position.

At block 404, the processing circuitry 204 determines a horizontal joint position of the joint 120. In some examples, the determination may be based on input from the operator 110 (e.g., via training UI 210). In some examples, the processing circuitry 204 may use data received from the sensors 104 to determine the horizontal joint position.

In some examples, the processing circuitry may use data from the sensors 104 to identify the real time orientation of the welding-type tool 108 in relation to gravity (e.g., the gravity vector 602), and use that relative orientation to determine the horizontal joint position. For example, the processing circuitry 204 may determine an angle between the tool orientation vector 601 and the gravity vector 602 (see, e.g., FIG. 6). In some examples, different horizontal joint positions may correspond to different angles between the tool orientation vector 601 and the gravity vector 602, and the processing circuitry 204 may thereby automatically determine the horizontal joint position using the determined angle.

FIG. 6 is a diagram showing example angles that might occur between the tool orientation vector 601 and the gravity vector 602, and how those angles might correspond to different horizontal joint positions. In the example of FIG. 6, examples of joints 120 for two main types of welds (fillet and groove) are shown in different welding positions. In particular, six different example horizontal joint positions are shown: 1G, 2G, 2F, 4F-A, 4F-B, and 4G (though not shown, other positions, such as 1F, may also be used). The joint 120 is shown going into the page at all six positions. However, the orientation of the base plate workpiece 122a, and/or the orientation of a vector 604 extending perpendicular to the base plate workpiece 122a, varies. As the base plate perpendicular vector 604 is needed to determine certain welding technique parameters (i.e., work angle), it can be important for the technique monitoring process 300 to establish the particular horizontal position of the joint 120.

In the example of FIG. 6, the 1G, 2G, and 4G joint positions correspond to groove weld joints 120 between two workpieces 122 (e.g., butt joints). The 1G joint position is a groove weld in a flat position. The 2G joint position is a groove weld in a horizontal position. The 4G joint position is a groove weld in an overhead position. In some examples, either workpiece 122 may be considered the base plate workpiece 122 for the 1G, 2G, and 4G joint positions.

In the example of FIG. 6, the 2F, 4F-A, and 4F-B joints positions correspond to fillet weld joints 120 between two workpieces 122 (e.g., T joints). The 4F-A joint position is a fillet weld in a first overhead position. The 4F-B joint position is a fillet weld in a second overhead position. The 2F joint position is a fillet weld in a horizontal position. In some examples, the workpiece 122a is the base plate workpiece 122a for the 2F, 4F-A, and 4F-B joints positions.

In the example of FIG. 6, the base plate perpendicular vector 604 is the same (i.e., straight up, parallel to the direction of gravity) for both the 1G and 2F joint positions. Likewise, the base plate perpendicular vector 604 would be the same (i.e., straight down, parallel to the direction of gravity) for both the 4G and 4F-A joints positions. The base plate perpendicular vector 604 would be the same for both the 2G and 4F-B joint positions (i.e., horizontal, perpendicular to the direction of gravity in a plane containing both the gravity vector 602 and tool orientation vector 601). In some examples, for the 2G and 4F-B joint positions, a base plate perpendicular vector 604 that is parallel to gravity may still be used to determine the relevant welding technique parameter(s) (e.g., travel angle), and simply modified (e.g., via addition/subtraction) by ninety degrees to account for the difference (e.g., 90 - travel angle = modified travel angle).

In the example of FIG. 6, a 22.5 - 67.5 degree angle between the gravity vector 602 and tool orientation vector 601 corresponds to the 1G and/or 2F position (and/or the corresponding base plate perpendicular vector 604). As shown, a 67.5 - 112.5 degree angle between the gravity vector 602 and tool orientation vector 601 corresponds to the 2G and/or 4F-B position (and/or the corresponding base plate perpendicular vector 604). A 112.5 - 157.5 degree angle between the gravity vector 602 and tool orientation vector 601 is shown corresponding to the 4G and/or 4F-A position (and/or the corresponding base plate perpendicular vector 604).

In some examples, the processing circuitry 204 may be unable to automatically determine the horizontal joint position. For example, where the angle between the gravity vector 602 and tool orientation vector 601 is too small (or too large), the resulting cross product between the two vectors may become highly uncertain, and/or very small variations in measurement (e.g., noise) may have a significantly amplified impact on the cross product, such that the processing circuitry may be unable (or decline) to automatically determine the horizontal joint position based on the angle. In the example of FIG. 6, this situation is depicted where the angle is 0 - 22.5 degrees and/or 157.5 - 180 degrees. In some examples, the processing circuitry may provide a notification (e.g., via the training UI 210) informing the operator 110 if the horizontal position could not be automatically detected. In some examples, the processing circuitry 204 may repeat block 406 of the joint characteristic non-calibration procedure 400 if unable to automatically determine the horizontal joint position. In some examples, the processing circuitry 204 may lock in the most recently determined horizontal joint position once a welding operation has begun (and/or while ongoing) to avoid discontinuities in the calculations depending on joint position (e.g., such as might result from deviations outside of the acceptable range of angles).

In the example of FIG. 4, after block 406 and/or block 408, the joint characteristic non-calibration procedure 400 proceeds to block 410 where the processing circuitry 204 determines a first joint characteristic vector. In some examples, the first joint characteristic vector may be determined based on data from the sensors 104 as well as the joint position identified at block 406 or block 408.

In some examples, the first joint characteristic vector may be a joint orientation vector 606 (see, e.g., FIG. 6). For example, where the joint position is a (e.g., 3F or 3G) vertical joint position, the processing circuitry 204 may determine that the joint orientation vector 606 is parallel to (and/or the same as) the gravity vector 602 (see, e.g., FIG. 6).

In some examples, the first joint characteristic vector may be a base plate perpendicular vector 604. For example, where the joint position is a (e.g., 1G, 2G, 2F, 4F-A, 4F-B, or 4G) horizontal joint position (e.g., identified at block 406), the processing circuitry 204 may determine the base plate perpendicular vector 604 automatically (e.g., based on angle) or based on user selection, as discussed above. This is possible because, again, certain assumptions are made based on common welding practices, to simplify the calibration process of the technique monitoring process 300.

In some examples, the processing circuitry 204 may be able to determine either the joint orientation vector 606 or the base plate perpendicular vector 604 at block 410 of the joint characteristic non-calibration procedure 400, but not both. Nevertheless, being able to determine only one or the other may still allow the processing circuitry 204 to determine some real time welding technique parameter values, and/or provide some feedback, which can be valuable. While there are some drawbacks and limitations to the joint characteristic non-calibration procedure 400, there is still value in being able to provide feedback with only the minimal and simple calibrations of blocks 302 and 304, without requiring more from the operator 110 (who may forget and/or be reluctant to do so).

However, there may be some drawbacks and/or limitations to the joint characteristic non-calibration procedure 400. For example, being able to determine either the joint orientation vector 606 or base plate perpendicular vector 604 at block 410, but not both, may result in only being able to determine (and/or provide feedback with respect to) either the travel angle or work angle, but not both. Furthermore, while the travel angle or work angle may be estimated with some degree of accuracy (e.g., using some assumptions), more precise travel angle or work angle calculations may require both the joint orientation vector 606 and the base plate perpendicular vector 604. For example, precise calculations of travel angle and/or work angle may rely on both an angle between the tool orientation vector 601 and the joint orientation vector 606, and an angle between the tool orientation vector 601 and the base plate perpendicular vector 604 (e.g., applied to certain trigonometric functions). Additionally, in some examples, the real time automatic determination of horizontal joint position at block 406 of the joint characteristic non-calibration procedure 400 may rely on the operator 110 continuously holding the welding-type tool 108 within a range of particular angles (e.g., as discussed above with respect to block 406 and FIG. 6) which, while ideal for the envisioned joint positions, may not occur in practice. In some examples where the orientation of the welding-type tool 108 is instead within certain (e.g., prohibited) angle ranges (e.g., as shown in FIG. 6) the resulting angle calculations may be unreliable.

Some of the above noted drawbacks and/or limitations may be alleviated through the joint characteristic calibration procedure 500 of the technique monitoring process 300. In the example of FIG. 3, the joint characteristic calibration procedure 500 executes after block 306 if the processing circuitry 204 determines a calibration selection input was received. FIG. 5 shows an example of the joint characteristic calibration procedure 500.

In the example of FIG. 5, the joint characteristic calibration procedure 500 begins by executing the joint characteristic non-calibration procedure 400, discussed above. The result of the joint characteristic non-calibration procedure 400 is the determination of a first joint characteristic vector (e.g., either the joint orientation vector 606 or the base plate perpendicular vector 604, but not both). As shown, the joint characteristic calibration procedure 500 then proceeds to block 502, where the processing circuitry 204 determines a second joint characteristic vector.

In some examples, the second joint characteristic vector may be whichever of the joint orientation vector 606 or base plate perpendicular vector 604 was not determined (e.g., as the first joint characteristic vector) during the joint characteristic non-calibration procedure 400. In some examples, the processing circuitry 204 may further lock in the first joint characteristic vector, rather than leaving it variable and/or subject to the real-time dynamic determinations of the joint characteristic non-calibration procedure 400.

In some examples, the second joint characteristic vector may be determined based on the tool orientation vector 601 and the first joint characteristic vector (and/or the gravity vector 602). For example, for a horizontal joint position where the first joint characteristic vector is the base plate perpendicular vector 604, the processing circuitry 204 may determine the joint orientation vector 606 to be the cross product (and/or a vector perpendicular to both) of the tool orientation vector 601 and the base plate perpendicular vector 604 (and/or the gravity vector 602). As another example, for a vertical joint position where the first joint characteristic vector is the joint orientation vector 606, the processing circuitry 204 may determine a base plate surface vector 802 (see, e.g., FIG. 8a) to be the cross product (and/or a vector perpendicular to both) of the tool orientation vector 601 and the joint orientation vector 606 (and/or the gravity vector 602). Thereafter, the processing circuitry 204 may determine the base plate perpendicular vector 604 to be the cross product (and/or a vector perpendicular to both) of the base plate surface vector 802 and the joint orientation vector 606. In some examples, the processing circuitry 204 may negate (and/or take the opposite of) a vector direction resulting from a cross product, depending on the math conventions being used.

In the example of FIG. 3, the technique monitoring process 300 proceeds to block 308 after block 400 and/or block 500. At block 308, the processing circuitry 204 tracks the orientation and/or movement of the welding-type tool 108 using data from the sensors 104, identifies one or more welding technique parameters, and/or provides appropriate feedback. In some examples, the rotational orientation of the welding-type tool 108 (e.g., tool orientation vector 601) may be tracked in real time using data from the sensor(s) 104. In some examples, the linear movements (e.g., speed and direction) of the welding-type tool 108 may also be tracked using data from the sensor(s) 104.

In the example of FIG. 3, the technique monitoring process 300 proceeds from block 308 to block 310, where real time welding technique parameter values may be determined based on the tracked orientation(s) and/or movement(s) of the welding-type tool 108 and the known joint characteristic vectors. For example, where the joint orientation vector 606 is known, travel angle can be determined (or at least estimated). In some examples, travel angle may be defined as the angle of the welding-type tool 108 with respect to a direction that a welding-type operation progresses (e.g., where a perpendicular angle is a zero degree travel angle). Thus, in some examples, the technique monitoring process 300 may determine the travel angle based on the angle between the joint orientation vector 606 and the tool orientation vector 601 (and/or 90 degrees minus this angle).

As another example, where the base plate perpendicular vector 604 is known, work angle can be determined (or at least estimated). In some examples, work angle may be defined as the angle between a line perpendicular to the major workpiece (e.g., base plate workpiece 122a) and a plane determined by the electrode axis (e.g., tool orientation vector 601) and the weld axis (e.g., joint orientation vector 606). Thus, in some examples, the technique monitoring process 300 may determine the work angle based on the base plate perpendicular vector 604 and the tool orientation vector 601 (e.g., where the tool orientation vector 601 is assumed to be on the plane).

As another example, where both the joint orientation vector 606 and base plate perpendicular vector 604 are known (e.g., after the joint characteristic calibration procedure 500), the processing circuitry 204 may be able to precisely determine both travel angle and work angle. For example, precise calculations of travel angle and/or work angle may rely on both an angle between the tool orientation vector 601 and the joint orientation vector 606, and an angle between the tool orientation vector 601 and the base plate perpendicular vector 604 (e.g., applied to certain trigonometric functions).

In some examples, welding technique parameter values related to movement may also be determined at block 310. For example, movement of the welding-type tool 108 in a plane defined by the joint orientation vector 606 and a base plate surface vector 802 may be analyzed to determine weave pattern characteristics (e.g., frequency, weave width, dwell time, etc.). In examples where travel angle is determined, the technique monitoring process 300 may use the travel direction in conjunction with travel angle to determine whether welding-type operation is a push or drag operation (e.g., based on whether tool orientation vector 601 and travel direction are in the same, or a different, direction). In some examples, a positive travel angle may be considered a push, while a negative travel angle is considered a drag.

In some examples, movement in a direction parallel to the joint orientation vector 606 may be assumed to be in a correct direction. Thus, in some examples, if the joint orientation vector 606 is known, speed of movement in a direction parallel to the joint orientation vector 606 may be considered travel speed. In some examples, a separate calibration procedure may be used to inform the processing circuitry 204 of the correct travel direction. For example, the tool orientation vector 601 may be oriented along the correct direction of travel and an input provided (e.g., via the training UI 210). As another example, the welding-type tool 108 may be moved in the correct direction during an identified calibration time duration (e.g., while a calibration input is held down, or pressed at start/end). As another example, a simple input may be provided (e.g., via the training UI 210) indicating that the travel direction is up, down, left, or right (e.g., from the perspective of the operator 110).

In the example of FIG. 3, the technique monitoring process 300 proceeds from block 310 to block 312, where the processing circuitry 204 provides (e.g., real time) feedback. In some examples, the feedback may be provided to the operator 110 via the training UI 210. In some examples, the feedback may be in the form of one or more text messages, images, videos, sounds, vibrations, and/or appropriate outputs. In some examples, the feedback may identify one or more of the welding technique parameter values and/or weave pattern characteristics determined at block 310. In some examples, the feedback may identify one or more welding, sensor, and/or operation parameter values.

In some examples, the feedback may be with respect to that particular instantaneous moment in time, and/or with respect to a given time period. In some examples, the processing circuitry 204 may compare the determined parameter values (and/or weave pattern characteristic values) to expected and/or target welding technique parameter (and/or weave pattern characteristic) values, and/or provide feedback regarding the comparison. In some examples, the technique monitoring process 300 might provide different feedback (e.g., red vs. green colors, chime vs. alarm sounds, etc.) depending on whether the determined values are within, or outside of, a threshold range of the expected/target values. In some examples, the processing circuitry 204 may further determine one or more ratings, grades, and/or scores based on the comparison of the determined values to the expected/target values, and provide feedback with respect thereto.

In some examples, the processing circuitry 204 may further record in memory circuitry 206 and/or transmit (e.g., to a remote server) parameter/characteristic values, and/or relative feedback. For example, the processing circuitry 204 may send the information to the welding equipment 106. In some examples, the welding equipment 106 may use the information to adjust welding parameters. In some examples, the processing circuitry 204 may disable the welding equipment 106, send a message to a supervisor, lock the workpiece(s) 122 (e.g., via a clamp or fixture), and/or take other appropriate action in response to a technique grade, rating, and/or score below a threshold (e.g., stored in memory).

In some examples, the processing circuitry 204 may further track when a (e.g., live or simulated) welding-type operation is occurring (e.g., via communication with welding equipment 106) and use this information when determining parameter/characteristic values. For example, the processing circuitry 204 may only determine technique data and/or weave pattern characteristics when a welding-type operation is occurring. As another example, the processing circuitry 204 may only provide feedback and/or determine a grade, rating, and/or score when an actual (or simulated) welding-type operation is occurring. As another example, the processing circuitry 204 may record and/or output information about whether the welding-type operation is occurring when recording and/or outputting the technique data and/or weave pattern characteristics (and/or associated feedback).

In some examples, the processing circuitry 204 may be able to continuously provide real time determination and feedback of at least some welding parameter values at blocks 308-312. In the example of FIG. 3, if there is no repositioning of, and/or changes to, the sensors 104 (e.g., at block 314) and/or joint 120 (e.g., at block 318), the technique monitoring process 300 may loop back to blocks 308-312 and the processing circuitry 204 may continue to provide feedback as to at least some welding parameter values. Though not shown, in some examples, the technique monitoring process 300 may be terminated at any time by appropriate input from the operator 110.

In the example of FIG. 3, the technique monitoring process 300 proceeds from block 312 to block 314, where the processing circuitry 204 checks to see if there has been a change in the sensors 104 that warrants recalibration. In some examples, a change warranting recalibration may be determined to occur if more than a threshold amount of time has passed since the sensors 104 were calibrated at block 302. As shown, the technique monitoring process 300 returns to block 302 if recalibration is warranted due to sensor change, and otherwise proceeds to block 316.

At block 316, the processing circuitry 204 determines whether the technique monitoring process 300 has already executed the joint characteristic calibration procedure 500. If not, the technique monitoring process 300 returns to block 304. If so, the technique monitoring process 300 proceeds to block 318.

At block 318, the processing circuitry 204 checks whether there has been a significant enough change in the joint 120 to warrant recalibration. In some examples, the technique monitoring process 300 may rely on the operator 110 to provide this information (e.g., via the training UI 210). For example, if the operator 110 finishes one welding-type operation, and is set to begin a different welding-type operation with one or more different workpieces 122 and/or one or more different joints 120, then the operator 110 may provide an input to let the processing circuitry 204 know that the prior joint calibrations are no longer applicable. In such an example, the technique monitoring process 300 would return to block 304. However, if, for example, the operator 110 is continuing with the same welding-type operation, or even starting a new welding-type operation where the joint 120 is in the same position and/or oriented the same way as the previous welding-type operation, then the technique monitoring process 300 may continue monitoring (e.g., at block 308) with no additional calibrations necessary.

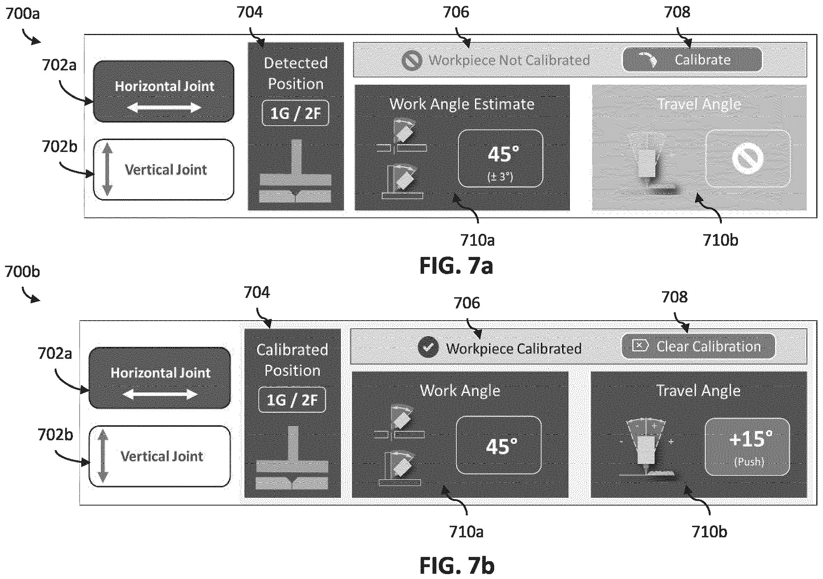

FIGS. 7a-7b show examples of graphical user interfaces (GUIs) 700 that might be shown during the technique monitoring process 300, such as, for example, via the display monitor 158 of the training UI 210. In FIGS. 7a-7b, the GUIs 700 have input buttons 702 by which an operator 110 might select the orientation of the joint 120 (e.g., at block 304). As shown, the input button 702a is highlighted to show that the horizontal joint orientation has been selected.

In the examples of FIGS. 7a-7b, the GUIs 700 are additionally shown as including a joint position indicator 704. In the GUI 700a shown in FIG. 7a, the joint position indicator 704 indicates that the 1G/2F joint position has been automatically detected (e.g., via block 406). In the GUI 700b shown in FIG 7b, the joint position indicator 704 indicates that the 1G/2F joint position has been locked in via calibration (e.g., via the joint characteristic calibration procedure 500). The joint position indicators 704 in both GUIs 700 further show a depiction of example workpieces in a 1G and 2F joint position.

In the example of FIGS. 7a-7b, the GUIs 700 show a calibration status message 706 next to a calibration button 708. In the GUI 700a of FIG. 7a, the calibration status message 706 indicates that full calibration has not yet been achieved. This correlates with the j oint position indicator 704 in GUI 700a which indicates that the joint position has only been detected, rather than locked in via calibration. The calibration button 708 next to the calibration status message 706 provides a means through which an operator 110 could provide an input to induce full calibration (e.g., at block 306).

In the GUI 700b of FIG. 7b, the calibration status message 706 indicates that the weld training system 100 has been fully calibrated to be able to recognize both joint characteristic vectors. This correlates with the joint position indicator 704 in GUI 700b, which indicates that the joint position has been locked in during calibration, rather than just instantaneously detected at the current point in time. The calibration button 708 next to the calibration status message 706 provides an input through which an operator 110 could clear the current calibration, such as if, for example, the operator 110 was starting a new welding-type operation with a different joint position (e.g., block 318).

While not shown, in some examples, the calibration status message 706 might also indicate a threshold amount of time had passed since calibration, indicate a time until such a threshold would pass, and/or indicate a confidence level of the feedback given the time since calibration. In some examples, the calibration button 708 may be unavailable as a means through which an operator 110 could provide an input to induce calibration (e.g., at block 306), such as for example, if the angle formed by the tool orientation vector 601 and the gravity vector 602 is too extreme. In some examples where the calibration button 708 is unavailable, the calibration button 708 may be grayed out and/or include a notification indicating why the calibration button 708 is unavailable.

In the examples of FIGS. 7a-7b, each GUI 700 provides two feedback outputs 710. In the GUI 700a shown in FIG. 7a, the feedback output 710a shows the current work angle estimated by the technique monitoring process 300. While the feedback output 710b of GUI 700b corresponds to the current travel angle estimated by the technique monitoring process 300, the feedback output 710b is shown grayed out with a prohibition symbol to indicate that the technique monitoring process 300 cannot provide feedback for this technique parameter (e.g., because the technique monitoring process 300 has not been fully calibrated). In some examples, the feedback output 710a might instead be grayed out were the vertical joint position indicator 704b instead selected.

In the GUI 700b shown in FIG. 7b, both feedback outputs 710 show values detected (rather than estimated) during the technique monitoring process 300, as made possible by full calibration during the technique monitoring process 300. Additionally, the feedback output 710b provides feedback that the welding-type operation is a push (rather than pull) operation.

While described as feedback outputs 710, in some examples, the feedback outputs 710 may alternatively, or additionally, be means through which input can be provided. For example, selection of the feedback outputs 710 may change the format of the feedback being output (e.g., from numerical, to chart/graph, to numerical and chart/graph, etc.). While only travel angle and weld angle are shown in the feedback outputs 710, in some examples other parameter values (and/or weave pattern characteristic values) may be shown.

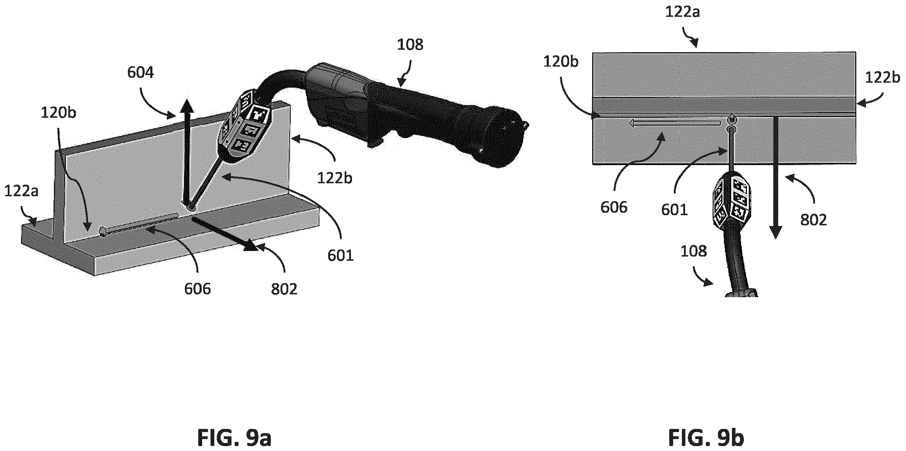

FIGS. 8a-9b show examples of how the aforementioned vectors might correspond to a vertical groove welding joint 120a between two workpieces 122, and/or a horizontal fillet welding joint 120b between two workpieces 122. In the example of FIGS. 8a-8b, the welding-type tool 108 is operating on a 3G vertical groove butt joint 120a between two workpieces 122. In the example of FIGS. 9a-9b, the welding-type tool 108 is operating on a 2F horizontal fillet T joint 120b between two workpieces 122. In FIGS. 8a-b, a tool orientation vector 601, gravity vector 602, joint orientation vector 606, base plate surface vector 802, and base plate perpendicular vector 604 is shown adjacent the workpieces 122.

In the examples of FIGS. 8a-8b, the joint orientation vector 606 is parallel to the joint 120a and the direction of gravity. In some examples, the parallel relationship between the joint orientation vector 606 and direction of gravity makes it easy to identify the joint orientation vector 606 for vertically oriented joints. As shown, the base plate surface vector 802 is perpendicular to the joint orientation vector 606. The base plate surface vector 802 is also perpendicular to the tool orientation vector 601 and the base plate perpendicular vector 604. These latter relationships are somewhat easier to see in FIG. 8b, which shows a top down view.

In the examples of FIGS. 9a-9b, the base plate perpendicular vector 604 is parallel to the direction of gravity. In some examples, this relationship makes it easy to identify the base plate perpendicular vector 604 for horizontally oriented joints; although, in some horizontal joint examples (e.g., 2G/4F-B), the base plate perpendicular vector 604 may instead be perpendicular to the direction of gravity (see, e.g., FIG. 6). As shown, the joint orientation vector 606 is parallel to the joint 120b, as well as perpendicular to the base plate perpendicular vector 604 and the tool orientation vector 601. These relationship between the joint orientation vector 606 and tool orientation vector 601 are somewhat easier to see in FIG. 9b, which shows a top down view.

While also shown in the examples of FIGS. 9a-9b, in some examples, the base plate surface vector 802 may be less important for horizontal joints, where the base plate perpendicular vector 604 can be determined from the gravity vector 602. In some examples, the base plate surface vector 802 may be more important for vertical joints, where the base plate surface vector 802 is needed to determine the base plate perpendicular vector 604. In any case, the relationships between the vectors allow for the simple and intuitive calibration techniques described above.

The disclosed example weld training system 100 provides a robust solution for monitoring an orientation of a welding-type tool 108, and providing feedback as to welding technique. The system 100 uses a fast, simple, and intuitive calibration process for gathering information on joint characteristics later used to monitor (and/or provide feedback regarding) welding technique. The system 100 can also provide some feedback with only minimal calibration, allowing for value to be provided even where an operator 110 forgets, or is unwilling to take the time to fully calibrate the system 100.

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more non-limiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, a control circuit may include digital and/or analog circuitry, discrete and/or integrated circuitry, microprocessors, DSPs, etc., software, hardware and/or firmware, located on one or more boards, that form part or all of a controller, and/or are used to control a welding process, and/or a device such as a power source or wire feeder.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor.

The term "power" is used throughout this specification for convenience, but also includes related measures such as energy, current, voltage, and enthalpy. For example, controlling "power" may involve controlling voltage, current, energy, and/or enthalpy, and/or controlling based on "power" may involve controlling based on voltage, current, energy, and/or enthalpy.

As used herein, welding-type refers to actual live, and/or simulated, welding (including laser welding and/or hot wire welding), cladding (including laser cladding), brazing, plasma cutting, induction heating, carbon arc cutting or gouging, hot wire preheating, and/or resistive preheating.

As used herein, a welding-type tool refers to a tool suitable for and/or capable of actual live, and/or simulated, welding (including laser welding and/or hot wire welding), cladding (including laser cladding), brazing, plasma cutting, induction heating, carbon arc cutting or gouging, hot wire preheating, and/or resistive preheating.

As used herein, welding-type power refers to power suitable for actual live welding (including laser welding and/or hot wire welding), cladding (including laser cladding), brazing, plasma cutting, induction heating, carbon arc cutting or gouging, hot wire preheating, and/or resistive preheating.

As used herein, a welding-type power supply and/or welding-type power source refers to a device capable of, when input power is applied thereto, supplying output power suitable for actual live welding (including laser welding and/or hot wire welding), cladding (including laser cladding), brazing, plasma cutting, induction heating, carbon arc cutting or gouging, hot wire preheating, and/or resistive preheating; including but not limited to transformer-rectifiers, inverters, converters, resonant power supplies, quasi-resonant power supplies, switch-mode power supplies, etc., as well as control circuitry and other ancillary circuitry associated therewith.

As used herein, disable may mean deactivate, incapacitate, and/or make inoperative. As used herein, enable may mean activate and/or make operational.

Disabling of circuitry, actuators, and/or other hardware may be done via hardware, software (including firmware), or a combination of hardware and software, and may include physical disconnection, de-energization, and/or a software control that restricts commands from being implemented to activate the circuitry, actuators, and/or other hardware. Similarly, enabling of circuitry, actuators, and/or other hardware may be done via hardware, software (including firmware), or a combination of hardware and software, using the same mechanisms used for disabling.

Certain embodiments of the invention are described in the following numbered clauses:
Clause 1. A method of monitoring welding technique for a horizontal welding joint, the method comprising:
   determining, via processing circuitry, a base plate perpendicular vector based on first sensor data detected by a sensor system during a first time period;
   determining, via processing circuitry, a joint orientation vector based on the base plate perpendicular vector and second sensor data detected during a second time period by the sensor system, the joint orientation vector being perpendicular to the base plate perpendicular vector, and a tool orientation vector of a welding-type tool tracked by the sensor system;
   tracking, during a third time period, via the processing circuitry, the tool orientation of the welding-type tool using third sensor data detected by the sensor system during the third time period; and
   identifying, via the processing circuitry, a welding technique parameter value based on the tool orientation of the welding-type tool, the base plate perpendicular vector, and the joint orientation vector.
Clause 2. The method of clause 2, wherein the first sensor data comprises gravity data representative of a gravity vector and tool orientation data.
Clause 3. The method of clause 2, wherein the tool orientation data comprises image data representative of one or more images, and determining the base plate perpendicular vector and the joint orientation vector comprises:
   identifying a tool orientation vector based on a rigid body model of the welding-type tool and an arrangement of markers shown on the welding-type tool in the one or more images, the tool orientation vector being representative of the tool orientation of the welding-type tool;
   determining the base plate perpendicular vector based on the gravity vector and the tool orientation vector; and
   determining the joint orientation vector based on the base plate perpendicular vector and the tool orientation vector.
Clause 4. The method of clause 1, wherein the third time period comprises a time period when the welding-type tool is performing a welding-type operation, and the welding technique parameter value is identified in real time during the third time period.
Clause5. The method of clause 1, wherein the first time period and the second time period comprise non-overlapping time periods.
Clause 6. The method of clause 1, further comprising providing feedback, via a user interface, based on the welding technique parameter value, the welding technique parameter value comprising a work angle value or a travel angle value of the welding-type tool.
Clause 7. The method of clause 1, wherein the sensor system comprises a camera, an optical sensor, a motion sensor, a depth sensor, an RF sensor, an ultrasonic sensor, a magnetic sensor, an acoustic sensor, or an accelerometer.
Clause 8. A method of monitoring welding technique for a vertical welding joint, the method comprising:
   determining, via processing circuitry, a joint orientation vector based on first sensor data detected by a sensor system during a first time period;
   determining, via processing circuitry, a base plate perpendicular vector based on the joint orientation vector and second sensor data detected during a second time period by the sensor system;
   tracking, during a third time period, via the processing circuitry, a tool orientation of the welding-type tool using third sensor data detected by the sensor system during the third time period; and
   identifying, via the processing circuitry, a welding technique parameter value based on the tool orientation of the welding-type tool, the base plate perpendicular vector, and the joint orientation vector.
Clause 9. The method of clause 8, wherein the first sensor data comprises gravity data representative of a gravity vector.
Clause 10. The method of clause 8, wherein the second sensor data comprises gravity data representative of a gravity vector and tool orientation data, wherein determining the base plate perpendicular vector and the joint orientation vector comprises:
   determining the joint orientation vector based on the gravity vector;
   identifying, via the processing circuitry, a tool orientation vector based on the tool orientation data, the tool orientation vector being representative of the tool orientation of the welding-type tool;
   determining, via the processing circuitry, a base plate surface vector as being perpendicular to the joint orientation vector and the tool orientation vector; and
   determining, via the processing circuitry, the base plate perpendicular vector as being perpendicular to the base plate surface vector and the joint orientation vector.
Clause 11. The method of clause 8, wherein the third time period comprises a time period when the welding-type tool is performing a welding-type operation, and the welding technique parameter value is identified in real time during the third time period.
Clause 12. The method of clause 8, wherein the first time period and the second time period comprise overlapping time periods.
Clause 13. The method of clause 8, further comprising providing feedback, via a user interface, based on the welding technique parameter value, the welding technique parameter value comprising a work angle value or a travel angle value of the welding-type tool.
Clause 14. The method of claim 8, wherein the sensor system comprises a camera, an optical sensor, a motion sensor, a depth sensor, an RF sensor, an ultrasonic sensor, a magnetic sensor, an acoustic sensor, or an accelerometer.
Clause 15. A weld monitoring system for a horizontal welding joint, comprising:
   a sensor system configured to detect first sensor data during a first time period, second sensor data during a second time period, and third sensor data during a third time period;
   processing circuitry; and
   memory circuitry comprising non-transitory machine readable instructions which, when executed by the processing circuitry, causes the processing circuitry to:
      determine, a base plate perpendicular vector based on the first sensor data detected by the sensor system during the first time period,
      determine a joint orientation vector based on the base plate perpendicular vector and second sensor data detected during a second time period by the sensor system, the joint orientation vector being perpendicular to the base plate perpendicular vector and a tool orientation of a welding-type tool tracked by the sensor system,
      track, during a third time period, the tool orientation of the welding-type tool using third sensor data detected by the sensor system during the third time period, and
      identify a welding technique parameter value based on the tool orientation of the welding-type tool, the base plate perpendicular vector, and the joint orientation vector.
Clause 16. The weld monitoring system of clause 15, wherein the first sensor data comprises gravity data representative of a gravity vector and tool orientation data.
Clause 17. The weld monitoring system of clause 16, wherein the tool orientation data comprises image data representative of one or more images, and determining the base plate perpendicular vector and the joint orientation vector comprises:
   identifying a tool orientation vector based on a rigid body model of the welding-type tool and an arrangement of markers shown on the welding-type tool in the one or more images, the tool orientation vector being representative of the tool orientation of the welding-type tool,
   determining the base plate perpendicular vector based on the gravity vector and the tool orientation vector, and
   determining the joint orientation vector based on the base plate perpendicular vector and the tool orientation vector.
Clause 18. The weld monitoring system of clause 15, wherein the first time period and the second time period comprise non-overlapping time periods, the third time period comprises a time period when the welding-type tool is performing a welding-type operation, and the welding technique parameter value is identified in real time during the third time period.
Clause 19. The weld monitoring system of clause 15, further comprising a user interface configured to provide feedback based on the welding technique parameter value, the welding technique parameter value comprising a work angle value or a travel angle value of the welding-type tool.
Clause 20. The weld monitoring system of clause 15, wherein the sensor system comprises a camera, an optical sensor, a motion sensor, a depth sensor, an RF sensor, an ultrasonic sensor, a magnetic sensor, an acoustic sensor, or an accelerometer.

## Claims

1. A method of monitoring welding technique for a horizontal welding joint, the method comprising:
determining, via processing circuitry, a base plate perpendicular vector based on first sensor data detected by a sensor system during a first time period;
determining, via processing circuitry, a joint orientation vector based on the base plate perpendicular vector and second sensor data detected during a second time period by the sensor system, the joint orientation vector being perpendicular to the base plate perpendicular vector, and a tool orientation vector of a welding-type tool tracked by the sensor system;
tracking, during a third time period, via the processing circuitry, the tool orientation of the welding-type tool using third sensor data detected by the sensor system during the third time period; and
identifying, via the processing circuitry, a welding technique parameter value based on the tool orientation of the welding-type tool, the base plate perpendicular vector, and the joint orientation vector.

2. The method of claim 1, wherein the first sensor data comprises gravity data representative of a gravity vector and tool orientation data and optionally wherein the tool orientation data comprises image data representative of one or more images, and determining the base plate perpendicular vector and the joint orientation vector comprises:
identifying a tool orientation vector based on a rigid body model of the welding-type tool and an arrangement of markers shown on the welding-type tool in the one or more images, the tool orientation vector being representative of the tool orientation of the welding-type tool;
determining the base plate perpendicular vector based on the gravity vector and the tool orientation vector; and
determining the joint orientation vector based on the base plate perpendicular vector and the tool orientation vector.

3. The method of claim 1, wherein the third time period comprises a time period when the welding-type tool is performing a welding-type operation, and the welding technique parameter value is identified in real time during the third time period, or
wherein the first time period and the second time period comprise non-overlapping time periods.

4. The method of claim 1, further comprising providing feedback, via a user interface, based on the welding technique parameter value, the welding technique parameter value comprising a work angle value or a travel angle value of the welding-type tool, or
wherein the sensor system comprises a camera, an optical sensor, a motion sensor, a depth sensor, an RF sensor, an ultrasonic sensor, a magnetic sensor, an acoustic sensor, or an accelerometer.

5. A method of monitoring welding technique for a vertical welding joint, the method comprising:
determining, via processing circuitry, a joint orientation vector based on first sensor data detected by a sensor system during a first time period;
determining, via processing circuitry, a base plate perpendicular vector based on the joint orientation vector and second sensor data detected during a second time period by the sensor system;
tracking, during a third time period, via the processing circuitry, a tool orientation of the welding-type tool using third sensor data detected by the sensor system during the third time period; and
identifying, via the processing circuitry, a welding technique parameter value based on the tool orientation of the welding-type tool, the base plate perpendicular vector, and the joint orientation vector.

6. The method of claim 5, wherein the first sensor data comprises gravity data representative of a gravity vector.

7. The method of claim 5, wherein the second sensor data comprises gravity data representative of a gravity vector and tool orientation data, wherein determining the base plate perpendicular vector and the joint orientation vector comprises:
determining the joint orientation vector based on the gravity vector;
identifying, via the processing circuitry, a tool orientation vector based on the tool orientation data, the tool orientation vector being representative of the tool orientation of the welding-type tool;
determining, via the processing circuitry, a base plate surface vector as being perpendicular to the joint orientation vector and the tool orientation vector; and
determining, via the processing circuitry, the base plate perpendicular vector as being perpendicular to the base plate surface vector and the joint orientation vector.

8. The method of claim 5, wherein the third time period comprises a time period when the welding-type tool is performing a welding-type operation, and the welding technique parameter value is identified in real time during the third time period, or
wherein the first time period and the second time period comprise overlapping time periods.

9. The method of claim 5, further comprising providing feedback, via a user interface, based on the welding technique parameter value, the welding technique parameter value comprising a work angle value or a travel angle value of the welding-type tool, or
wherein the sensor system comprises a camera, an optical sensor, a motion sensor, a depth sensor, an RF sensor, an ultrasonic sensor, a magnetic sensor, an acoustic sensor, or an accelerometer.

10. A weld monitoring system for a horizontal welding joint, comprising:
a sensor system configured to detect first sensor data during a first time period, second sensor data during a second time period, and third sensor data during a third time period;
processing circuitry; and
memory circuitry comprising non-transitory machine readable instructions which, when executed by the processing circuitry, causes the processing circuitry to:
determine, a base plate perpendicular vector based on the first sensor data detected by the sensor system during the first time period,
determine a joint orientation vector based on the base plate perpendicular vector and second sensor data detected during a second time period by the sensor system, the joint orientation vector being perpendicular to the base plate perpendicular vector and a tool orientation of a welding-type tool tracked by the sensor system,
track, during a third time period, the tool orientation of the welding-type tool using third sensor data detected by the sensor system during the third time period, and
identify a welding technique parameter value based on the tool orientation of the welding-type tool, the base plate perpendicular vector, and the joint orientation vector.

11. The weld monitoring system of claim 10, wherein the first sensor data comprises gravity data representative of a gravity vector and tool orientation data.

12. The weld monitoring system of claim 11, wherein the tool orientation data comprises image data representative of one or more images, and determining the base plate perpendicular vector and the joint orientation vector comprises:
identifying a tool orientation vector based on a rigid body model of the welding-type tool and an arrangement of markers shown on the welding-type tool in the one or more images, the tool orientation vector being representative of the tool orientation of the welding-type tool,
determining the base plate perpendicular vector based on the gravity vector and the tool orientation vector, and
determining the joint orientation vector based on the base plate perpendicular vector and the tool orientation vector.

13. The weld monitoring system of claim 10, wherein the first time period and the second time period comprise non-overlapping time periods, the third time period comprises a time period when the welding-type tool is performing a welding-type operation, and the welding technique parameter value is identified in real time during the third time period.

14. The weld monitoring system of claim 10, further comprising a user interface configured to provide feedback based on the welding technique parameter value, the welding technique parameter value comprising a work angle value or a travel angle value of the welding-type tool.

15. The weld monitoring system of claim 10, wherein the sensor system comprises a camera, an optical sensor, a motion sensor, a depth sensor, an RF sensor, an ultrasonic sensor, a magnetic sensor, an acoustic sensor, or an accelerometer.
